(19) Europäisches Patentamt
European Patent Office
Office européen des brevets

(11) EP 3 564 577 A1

(12) **EUROPÄISCHE PATENTANMELDUNG**

(43) Veröffentlichungstag:
**06.11.2019 Patentblatt 2019/45**

(51) Int Cl.:
***F21V 3/04*** *(2018.01)* ***F21V 5/00*** *(2018.01)*
*F21V 5/02* *(2006.01)*

(21) Anmeldenummer: **18170481.8**

(22) Anmeldetag: **03.05.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder:
- **Katholieke Universiteit Leuven K.U. Leuven R&D 3000 Leuven (BE)**
- **Covestro (Tielt) NV 8700 Tielt (BE)**

(72) Erfinder:
- **Bral, Emmanuel 8700 Tielt (BE)**
- **Albrechts, Fabrice 8700 Tielt (BE)**
- **Meuret, Youri, Prof. 9820 Merelbeke (BE)**

(74) Vertreter: **Levpat c/o Covestro AG Gebäude 4825 51365 Leverkusen (DE)**

# (54) OPTISCHE LICHTLEITPLATTE

(57) Optische Lichtleitplatte (1) umfassend zumindest eine Leitschicht (3) aus einem thermoplastischen und transparenten Kunststoff, wobei die Leitschicht (3) auf einer einer Lichtquelle abgewandten Seite der Lichtleitplatte (1) eine lichtbrechende Struktur aufweist, wobei die Struktur aus einer Mehrzahl an hubbelförmigen Erhebungen (2) gebildet ist. Das technische Problem, eine optische Lichtleitplatte, insbesondere für LEDs, anzugeben, die sowohl einen geringen UGR-Wert, insbesondere einen UGR-Wert ≤19, als auch ein möglichst hohes Peak-Shielding für Lichtquellen und eine hohe optische Effizienz aufweist, wird erfindungsgemäß dadurch gelöst, dass die Erhebungen (2) jeweils einen mehreckigen, prismenförmigen Grundkörper (4) aufweisen, wobei sich an den Grundkörper (4) ein kuppelförmiger Körper (6), umfassend eine Spitze (14), anschließt und wobei die Mantellinien (16) des kuppelförmigen Körpers (6) in Form von kubischen Splines (18, 20) mit zumindest drei Kontrollpunkten ausgebildet sind.

Fig. 1

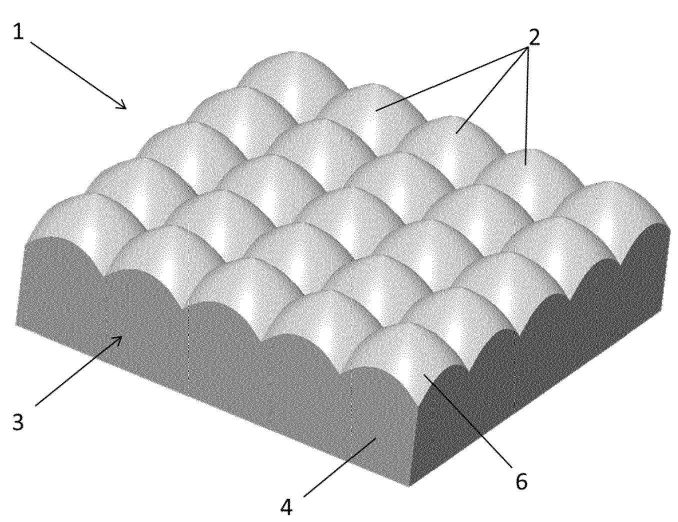


EP 3 564 577 A1

## Beschreibung

Die Erfindung betrifft eine optische Lichtleitplatte umfassend zumindest eine Leitschicht aus einem thermoplastischen und transparenten Kunststoff, wobei die Leitschicht auf einer einer Lichtquelle abgewandten Seite der Lichtleitplatte eine lichtbrechende Struktur aufweist und wobei die Struktur aus einer Mehrzahl an hubbelförmigen Erhebungen gebildet ist. Die Erfindung betrifft ebenfalls die Verwendung einer erfindungsgemäßen Lichtleitplatte.

Lichtleitplatten sind aus dem Stand der Technik bereits bekannt. Sie bestehen in der Regel aus mehreren Schichten, beispielsweise einer Substratschicht und einer Co-Extrusionsschicht, wobei die Co-Extrusionsschicht in üblicher Weise auf der einer Lichtquelle abgewandten Seite der Substratschicht angeordnet ist und eine lichtleitende bzw. lichtbrechende Struktur aufweist.

Das Hauptziel der Benutzung von optischen Lichtleitplatten in Leuchten ist das Entblenden von grellen Lichtquellen, beispielsweise von LEDs. Zur Bestimmung der psychologischen Blendung der jeweiligen Lichtquelle(n) wurde das UGR (unified glare rating) entwickelt und in der DIN EN 12464-1 geregelt. Zur Berechnung des UGR-Wertes wird die Blendung einer gesamten Beleuchtungsanlage für eine definierte Beobachterposition berechnet. Die Formel für den UGR-Wert lautet:

$$UGR = 8\log\,[(0{,}25/L_b)\ \Sigma((L^2 w)/p^2)]$$

Hierbei ist $L_b$ die Hintergrundbeleuchtung in der Sichtlinie eines Betrachters, welche typischerweise parallel zum Boden verläuft, $L$ beschreibt die Helligkeit jeder einzelnen Leuchte des Raumes, $w$ ist der räumliche Winkel der jeweiligen Leuchte von der Position des Betrachters und $p$ ist der Positionsindex nach Guth, welcher sich vergrößert, desto weiter die Leuchte von der Sichtlinie des Nutzer entfernt ist. Der UGR-Wert liegt typischerweise in einem Bereich zwischen 10 und 30. Je nach Schwierigkeit der verschiedenen Sehaufgaben des Betrachters sind laut der DIN EN 12464-1:2011-08 unterschiedliche UGR-Werte einzuhalten. Für das Lesen und Schreiben sowie für die Computerarbeit ist beispielsweise ein UGR-Wert von ≤19 einzuhalten.

Diese Definition illustriert, dass der UGR-Wert nicht die spezifische Blendung einer einzelnen Leuchte betrachtet, sondern die Blendung, die von einem Betrachter von einem spezifischen Punkt resultierend durch alle in dem Raum befindlichen Leuchten wahrgenommen wird. Demzufolge ist eine solche Definition nur geringfügig nützlich, um die spezifische Blendung einer einzelnen Leuchte zu bestimmen. Um einer solchen Tatsache entgegenzutreten und einzelne Leuchten miteinander vergleichen zu können, benutzen Leuchten-Hersteller und Lichtplaner häufig eine UGR-Tabelle nach dem sogenannten CIE Unified-Glare-Rating-Verfahren. In einer solchen Tabelle werden die UGR-Werte für verschiedene Reflektivitäten, Raumgrößen und Betrachterpositionen angegeben. Üblicherweise wird von Leuchten-Herstellern aber nur ein Wert angegeben, um Kunden eine einfache Möglichkeit zu geben, die Blendung von einzelnen Leuchten miteinander zu vergleichen. Hierbei wird in der Regel von einem Reflexionsgrad der Decke von 70%, der Wände von 50% und des Bodens von 20% ausgegangen. Als Blickrichtung nimmt der Benutzer eine Blickrichtung quer zur Leuchtenachse ein. In einer solchen Referenzsituation betragen die Raumabmessungen 4H/8H. Die im Rahmen dieser Patentanmeldung angegebenen UGR-Werte beziehen sich ebenfalls auf zuvor genannte Parameter.

Eine reine Angabe des UGR-Wertes ist allerdings nicht geeignet zur Beurteilung von Leuchten, die insbesondere Leuchtquellen, wie beispielsweise LEDs, aufweisen, da die UGR-Berechnung entwickelt wurde, um sie auf Lichtquellen anzuwenden, die eine kleine, aber homogen abstrahlende Fläche besitzen, wie z.B. frei strahlende Leuchtstofflampen, oder Leuchten mit Streuscheiben. Zudem haben Lichtleitplatten nicht nur Auswirkungen auf die Strahlungscharakteristik (Winkelverteilung) der Lichtquelle, sondern auch auf die Helligkeitsverteilung (räumliche Verteilung) der Lichtquelle. Hier ist es insbesondere von Vorteil, wenn die Spitzenleuchtkraft einer Leuchtquelle verringert wird, also ein sogenanntes Peak-Shielding stattfindet. Peak-Shielding bezeichnet eine Leuchtkraftdifferenz zwischen der reinen Betrachtung der Strahlenquelle, beispielsweise der LEDs, und der Betrachtung der Strahlenquelle mit Nutzung der Lichtleitplatte.

Eine weitere Größe, anhand derer Leuchten beurteilt werden können, ist die sogenannte optische Effizienz. Vorliegend wird die optische Effizienz als die Lichttransmission durch die Lichtleitplatte definiert. Die Lichttransmission ist aufgrund von internen Reflektionen eines Teils des Lichteinfalls, Fresnel-Reflektionen und Materialabsorption zwingend geringer als 100%. Aufgrund des Vorsehens von Lichtleitplatten wird auch ein gewisser Anteil des von einer Lichtquelle erzeugten Lichts reflektiert. Dabei ist es vorteilhaft, einen möglichst geringen Anteil des erzeugten Lichts zu reflektieren. Je geringer der Anteil des reflektierten Lichts ist, desto größer ist die optische Effizienz. Das von der Lichtleitplatte zurückgeworfene Licht kehrt zu der Lichtquelle zurück und wird von dieser erneut auf die Lichtleitplatte zurückgeworfen. Vorliegend werden für die Berechnung der optischen Effizienz bestimmte Annahmen für die Lichtquelle getroffen, wie beispielsweise Lambertsche Emissionen, Lambertsche Streuung und eine Reflektivität von 85 %.

Davon ausgehend liegt der Erfindung das technische Problem zugrunde, eine optische Lichtleitplatte, insbesondere für LEDs, anzugeben, die sowohl einen geringen UGR-Wert, insbesondere einen UGR-Wert ≤19, als auch ein

möglichst hohes Peak-Shielding für Lichtquellen und eine hohe optische Effizienz aufweist.

Das zuvor aufgeführte technische Problem wird erfindungsgemäß dadurch gelöst, dass die Erhebungen der Leitschicht der Lichtleitplatte, bevorzugt einer Leitschicht, bestehend aus einer Zusammensetzung auf Basis von aromatischem Polycarbonat, jeweils einen prismenförmigen Grundkörper aufweisen, wobei sich an den Grundkörper ein kuppelförmiger Körper, umfassend eine Spitze, anschließt und wobei die Mantellinien des kuppelförmigen Körpers in Form von kubischen Splines mit zumindest drei Kontrollpunkten ausgebildet sind.

In zahlreichen Tests und Versuchen wurde festgestellt, dass eine derartige Ausbildung der hubbelförmigen Erhebungen zu einem guten Kompromiss zwischen dem ermittelten UGR-Wert und dem Peak-Shielding führt. Durch den prismenförmigen Grundkörper ist es möglich, die Erhebungen ohne wesentlichen Abstand, bevorzugt unmittelbar, nebeneinander auf der Lichtleitplatte anzuordnen. Durch den kuppelförmigen Körper wird das Licht einer Lichtquelle insbesondere derart gebrochen, dass ein UGR-Wert $\leq 19$ erreicht wird. Als Lichtquellen werden bevorzugt eine oder mehrere LEDs verwendet. Dies führt dazu, dass eine erfindungsgemäße optische Lichtleitplatte im Zusammenspiel mit einer oder mehreren, bevorzugt mehreren, LED als Lichtquelle auch in Büroräumen eingesetzt werden kann.

Bei den kubischen Splines handelt es sich bevorzugt um sogenannte cSplines. Die einzelnen Splines interpolieren zwischen Kontrollpunkten, so dass bei n Kontrollpunkten n-1 Splines bzw. Spline-Segmente vorhanden sind. Die einzelnen Spline-Segmente bestehen aus kubischen Polynomen, die stetig differenzierbar ineinander übergehen. Die Spline-Segmente eines Splines können der gleichen oder unterschiedlichen Funktionen folgen.

Bei der Leitschicht handelt es sich um eine Schicht aus einem thermoplastischen und transparenten Kunststoff. Die Leitschicht weist demnach die Fähigkeit auf, Lichtstrahlen durchzulassen bzw. zu leiten, es handelt sich demnach um eine optische Leitfähigkeit. Es handelt sich erfindungsgemäß um transparenten Kunststoff, falls die Lichttransmission im Bereich einer Wellenlänge des Lichts von 380 nm bis 780 nm mindestens 3 %, bestimmt nach DIN ISO 13468-2:2006 (D65, 10 °) bei einer Schichtdicke von 4 mm, beträgt.

Eine einer Lichtquelle abgewandte Seite der Lichtleitplatte weist die lichtbrechende Struktur auf. Bevorzugt ist die Struktur auf der Seite der Lichtleitplatte angeordnet, welche der Seite der Lichtleitplatte, auf der die Lichtquelle angeordnet ist, gegenüberliegt.

Hubbelförmige Erhebungen im Sinne der Erfindung weisen einen prismenförmigen Grundkörper auf, an welchen sich ein kuppelförmiger Körper anschließt. Ein kuppelförmiger Körper weist vorzugsweise Übergangsbereiche, die sich unmittelbar an den Grundkörper anschließen, und eine Kuppel auf, die sich an die Übergangsbereiche unmittelbar anschließt, eine Spitze aufweist und bevorzugt halbkugel- oder glockenförmig ausgestaltet ist. Die Mantellinien der Kuppel laufen von der Spitze der Kuppel bis zu einem Fußpunkt der Kuppel bzw. einem Fußpunkt eines Fortsatzes der Mantelfläche der Kuppel. Solche Fußpunkte werden im Rahmen der Erfindung als Fußpunkt der Mantellinie definiert. Bei einem Fußpunkt handelt es sich um denjenigen Punkt, welcher die Mantellinie begrenzt. Der andere Begrenzungspunkt ist die Spitze der Kuppel.

Bevorzugt ist der Grundkörper als dreiseitiges, vierseitiges, fünfseitiges oder sechsseitiges Prisma mit einer gleichseitigen Grundfläche ausgebildet ist. Durch eine gleichseitige Grundfläche ist ein im Wesentlichen lückenloses, bevorzugt lückenloses Anordnen der einzelnen Erhebungen auf der Leitschicht der Lichtleitplatte möglich. Hierdurch werden möglichst alle Lichtstrahlen der Lichtquelle(n) durch die Erhebungen geführt und dadurch gebrochen bzw. umgelenkt.

Eine weitere bevorzugte Ausgestaltung der Erfindung ist dadurch gekennzeichnet, dass die Grundfläche des Prismas einen Flächeninhalt zwischen 0,05 $mm^2$ und 4 $mm^2$, bevorzugt von 0,5 $mm^2$ bis 4 $mm^2$, weiter bevorzugt einen Flächeninhalt zwischen 0,75 $mm^2$ und 2 $mm^2$ und besonders bevorzugt einen Flächeninhalt zwischen 0,8 $mm^2$ und 1,2 $mm^2$, aufweist. Eine derartige Größe lässt sich auf bekannten Produktionslinien zuverlässig extrudieren und bietet eine ausreichende Grundfläche der einzelnen Strukturen für eine Reduktion der psychologischen Blendung.

Bevorzugt weist der kuppelförmige Körper mit Ausnahme von sich an den Grundkörper anschließenden Übergangsbereichen eine rotationssymmetrische Mantelfläche auf. Dabei verläuft die Symmetrieachse senkrecht zu der Plattenebene durch die Spitze des kuppelförmigen Körpers. Die Übergangsbereiche schließen sich an den Grundkörper an und setzen sich aus Kreissegmenten, welche sich unmittelbar an die Seitenflächen des Prismas anschließen, sowie aus Fortsätzen der Mantelfläche des kuppelförmigen Körpers zusammen, wobei die Fortsätze der Mantelfläche durch die Kreissegmente begrenzt werden. Die zu den Übergangsbereichen gerichtete Kante einer Seitenfläche des Prismas ist identisch mit der Kreissehne des Kreissegments. Die Kreissegmente sind dabei in derselben Ebene angeordnet wie die Seitenflächen des Prismas, die durch die Kreissegmente begrenzt werden. Die Fortsätze der Mantelfläche schließen sich an die Kreissegmente an. Eine solche Ausgestaltung ist in produktions- und fertigungstechnischer Hinsicht vorteilhaft. Ebenfalls führt eine derartige Ausgestaltung zu den gewünschten optischen Eigenschaften der Erhebung bzw. Erhebungen.

Bevorzugt weisen die Erhebungen eine Drehsymmetrie auf. Dabei sind die Erhebungen vorzugsweise bei einer Drehung der jeweiligen Erhebung um eine senkrecht zu der Plattenebene und durch die Spitze des kuppelförmigen Körpers verlaufende Achse um einen bestimmten Winkel symmetrisch. Der Winkel der Drehsymmetrie beträgt dabei vorzugsweise 360°/Anzahl der Seiten des Prismas, wobei es sich bei den Seiten des Prismas nur um die im herkömmlichen Sinne zu verstehenden Seiten des Prismas handelt und nicht um die Grund- sowie Deckfläche des Prismas.

Bevorzugt sind die Mantellinien des kuppelförmigen Körpers jeweils in Form von zwei kubischen Splines mit drei Kontrollpunkten ausgebildet, wobei der erste kubische Spline von einem ersten Kontrollpunkt des Körpers bis zu einem zweiten Kontrollpunkt des Körpers verläuft und wobei der zweite kubische Spline von einem zweiten Kontrollpunkt bis zu einem dritten Kontrollpunkt des Körpers verläuft. Dabei ist es bevorzugt, dass der erste Kontrollpunkt durch die Spitze des kuppelförmigen Körpers definiert ist und dass der dritte Kontrollpunkt durch den Fußpunkt der jeweiligen Mantellinie definiert ist. Der zweite Kontrollpunkt ist bevorzugt entlang der Mantellinie des Körpers zwischen dem Fußpunkt und der Spitze des Körpers ausgebildet. Der erste und der zweite Kontrollpunkt sind durch einen ersten Spline bzw. ein erstes Spline-Segment miteinander verbunden, wobei der zweite und der dritte Kontrollpunkt mittels eines zweiten Splines bzw. eines zweiten Spline-Segmentes miteinander verbunden sind. Dabei bestehen die einzelnen Splines bzw. Spline-Segmente bevorzugt aus kubischen Polynomen, die stetig differenzierbar sind. Dies bedeutet, dass der erste Spline dort aufhört, wo der zweite Spline beginnt und dass darüber hinaus an dem zweiten Kontrollpunkt die beiden Tangenten des ersten sowie des zweiten Splines übereinstimmen, so dass sich ein weicher Übergang ohne einen Knick von dem ersten Spline zu dem zweiten Spline ergibt.

Dabei ist es bevorzugt, dass der Verlauf des ersten kubischen Splines durch folgende Formel definiert ist:

$$f_1(x) = a_1(x-x_1)^3 + b_1(x-x_1)^2 + c_1(x-x_1) + d_1$$

und dass der Verlauf des zweiten kubischen Splines durch folgende Formel definiert ist:

$$f_2(x) = a_2(x-x_2)^3 + b_2(x-x_2)^2 + c_2(x-x_2) + d_2.$$

Durch vorgenannte Formeln für die beiden kubischen Splines werden Mantellinien zur Begrenzung des kubischen Körpers definiert, die sich hinsichtlich der optischen Eigenschaften als besonders vorteilhaft erwiesen haben. Des Weiteren ist es bevorzugt, dass die folgenden Randbedingungen zutreffen:

$$f_1(0) = y_1; f_2(1) = 0; f_1'(1) = f_2'(0); f_1''(0) = 0 \text{ und } f_2''(1) = 0.$$

Dabei kennzeichnet der x-Wert 0 von $f_1$ und der y-Wert $y_1$ die Position der Spitze des kuppelförmigen Körpers, also die Position des ersten Kontrollpunkts $K_1$. Der x-Wert 1 von $f_2$ und der y-Wert 0 kennzeichnet die Position des Fußpunkts, also des dritten Kontrollpunkts $K_3$. Zusätzlich sind die beiden Splines aufgrund der gleichen Tangentensteigung in dem zweiten Kontrollpunkt $K_2$ stetig differenzierbar. Zusätzlich entspricht $f_1(1) = f_2(0)$. Bevorzugt entsprechen die Werte in dem aufgespannten Koordinatensystem dabei Angaben in mm.

Bevorzugt gilt für den ersten Kontrollpunkt: $K_1 = (0;y_1)$, wobei für den zweiten Kontrollpunkt gilt: $K_2 = (y_1/2+\Delta x;y_1/2)$ und wobei für den dritten Kontrollpunkt gilt: $K_3 = (1;0)$, wobei $y_1 \in [0,5;0,95]$ oder $y_1 \in [0,45;0,9]$ und wobei $\Delta x \in [0,05;0,25]$. Durch die Einhaltung derartiger Parameter stellt sich eine vorteilhafte Mantellinie des kuppelförmigen Körpers ein, die sich insbesondere bei der Reduktion der psychologischen Blendung als auch bei einer Erhöhung des Peak-Shielding als vorteilhaft erwiesen hat. Die Tangentensteigung in der Spitze beträgt nach einer bevorzugten Ausgestaltung der Erfindung 0.

Bevorzugt besteht der überwiegende Teil der Leitschicht aus einer Zusammensetzung auf Basis von aromatischem Polycarbonat. Besonders bevorzugt besteht die komplette Leitschicht aus einer Zusammensetzung auf Basis von aromatischem Polycarbonat. Bei der Zusammensetzung der Leitschicht kann es sich auch um eine solche auf Basis von PMMA oder auf Basis einer Mischung aus aromatischem Polycarbonat und PMMA handeln.

Polycarbonate im Sinne der vorliegenden Erfindung sind sowohl Homopolycarbonate als auch Copolycarbonate und/oder Polyestercarbonate; die Polycarbonate können in bekannter Weise linear oder verzweigt sein. Erfindungsgemäß können auch Mischungen von Polycarbonaten verwendet werden.

Als Material für die Leitschicht wird beispielsweise Makrolon® 3108 verwendet, bei welchem es sich um ein lineares, Bisphenol a-basiertes Polycarbonat mit einer MVR von 6,0 $cm^3/(10\ min)$, bestimmt nach DIN EN ISO 1133-1:2012-03 (300°C, 1,2 kg), handelt.

Die aromatischen Polycarbonate einschließlich der thermoplastischen, aromatischen Polyestercarbonate haben bevorzugt gewichtsmittlere Molekulargewichte $M_w$ von 15.000 g/mol bis 34.000 g/mol, vorzugsweise von 17.000 g/mol bis 33.000 g/mol, besonders bevorzugt von 19.000 g/mol bis 32.000 g/mol, ganz besonders bevorzugt von 22.000 bis 30.000 g/mol, ermittelt durch Gelpermeationschromotographie unter Verwendung von Dichlormethan als Elutionsmittel, Kalibrierung mit linearen Polycarbonaten (aus Bisphenol A und Phosgen) bekannter Molmassenverteilung der

PSS Polymer Standards Service GmbH, Deutschland, und dem Elutionsmittel Dichlormethan, Kalibrierung nach der Methode 2301-0257502-09D (aus dem Jahre 2009 in deutscher Sprache) der Currenta GmbH & Co. OHG, Leverkusen. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%. Flussrate: 1,0 ml/min, Temperatur der Lösungen: 30°C. Verwendung einer UV- und/oder RI-Detektion.

Ein Teil, bis zu 80 Mol-%, vorzugsweise von 20 Mol-% bis zu 50 Mol-%, der Carbonat-Gruppen in den erfindungsgemäß eingesetzten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der Polycarbonate subsumiert. Hierrunter sollen insbesondere thermoplastische, aromatische Polycarbonate verstanden und/oder subsumiert werden.

Die Herstellung der Polycarbonate erfolgt in bekannter Weise aus Dihydroxyarylverbindungen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten.

Für die Herstellung von Polycarbonaten geeignete Dihydroxyarylverbindungen sind solche der Formel (1)

$$HO\text{-}Z\text{-}OH \qquad (1),$$

in welcher

Z ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (1) für einen Rest der Formel (2)

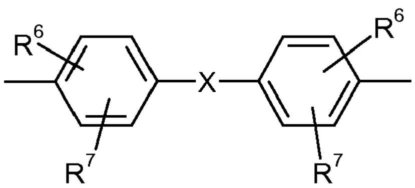

(2),

in der

$R^6$ und $R^7$ unabhängig voneinander für H, $C_1$- bis $C_{18}$-Alkyl-, $C_1$- bis $C_{18}$-Alkoxy, Halogen wie Cl oder Br oder für jeweils gegebenenfalls substituiertes Aryl- oder Aralkyl, bevorzugt für H oder $C_1$- bis $C_{12}$-Alkyl, besonders bevorzugt für H oder $C_1$- bis $C_8$-Alkyl und ganz besonders bevorzugt für H oder Methyl stehen, und

X für eine Einfachbindung, $-SO_2-$, -CO-, -O-, -S-, $C_1$- bis $C_6$-Alkylen, $C_2$- bis $C_5$-Alkyliden oder $C_5$- bis $C_6$-Cycloalkyliden, welches mit $C_1$- bis $C_6$-Alkyl, vorzugsweise Methyl oder Ethyl, substituiert sein kann, ferner für $C_6$- bis $C_{12}$-Arylen, welches gegebenenfalls mit weiteren Heteroatome enthaltenden aromatischen Ringen kondensiert sein kann, steht.

Bevorzugt steht X für eine Einfachbindung, $C_1$- bis $C_5$-Alkylen, $C_2$- bis $C_5$-Alkyliden, $C_5$- bis $C_6$-Cycloalkyliden, -O-, -SO-, -CO-, -S-, $-SO_2-$
oder für einen Rest der Formel (3)

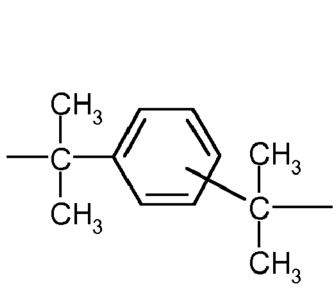

(3).

Beispiele für Dihydroxyarylverbindungen (Diphenole) sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole sowie deren kernalkylierte und kernhalogenierte Verbindungen.

Für die Herstellung der erfindungsgemäß zu verwendenden Polycarbonate und Copolycarbonate geeignete Dihydroxyarylverbindungen sind beispielsweise Hydrochinon, Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha,\alpha'$-Bis-(hydroxyphenyl)-diisopropylbenzole sowie deren alkylierte, kernalkylierte und kernhalogenierte Verbindungen. Zur Herstellung von Copolycarbonaten können auch Si-haltige Telechele eingesetzt werden, sodass sogenannte Si-Copolycarbonate erhalten werden.

Bevorzugte Dihydroxyarylverbindungen sind 4,4'-Dihydroxydiphenyl, 2,2-Bis-(4-hydroxyphenyl)-1-phenylpropan, 1,1-Bis-(4-hydroxyphenyl)-phenylethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propn, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-triamethylcyclohexan (Bisphenol TMC) sowie die Bisphenole der Formeln (I) bis (III)

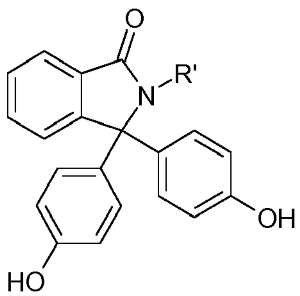
(I)

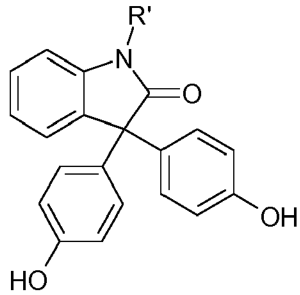
(II)

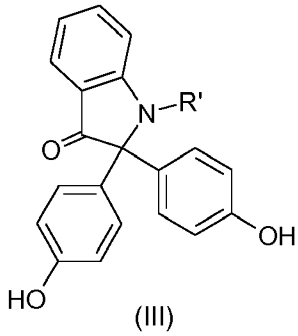
(III)

,

in denen R' jeweils für einen $C_1$- bis $C_4$-Alkylrest, Aralkylrest oder Arylrest, bevorzugt für einen Methylrest oder Phenylrest, ganz besonders bevorzugt für einen Methylrest, steht.

Besonders bevorzugte Dihydroxyarylverbindungen sind 4,4'-Dihydroxydiphenyl, 1,1-Bis-(4-hydroxyphenyl)-phenyl-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC) sowie die Dihydroxyarylverbindungen der Formeln (I), (II) und/oder (III).

Diese und weitere geeignete Dihydroxyarylverbindungen sind z.B. in US 2 999 835 A, 3 148 172 A, 2 991 273 A, 3 271 367 A, 4 982 014 A und 2 999 846 A, in den deutschen Offenlegungsschriften 1 570 703 A, 2 063 050 A, 2 036 052 A, 2 211 956 A und 3 832 396 A, der französischen Patentschrift 1 561 518 A1, in der Monographie "H. Schnell, Chemistry and Physics of Polycarbonates, Interscience Publishers, New York 1964, S. 28 ff.; S.102 ff.", und in "D.G. Legrand, J.T. Bendler, Handbook of Polycarbonate Science and Technology, Marcel Dekker New York 2000, S. 72 ff." beschrieben.

Im Falle der Homopolycarbonate wird nur eine Dihydroxyarylverbindung eingesetzt, im Falle von Copolycarbonaten werden zwei oder mehr Dihydroxyarylverbindungen eingesetzt.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan beziehungsweise der beiden Monomere Bisphenol A und 4,4'-Dihydroxydiphenyl, sowie von den Dihydroxyarylverbindungen der Formeln (I), (II) und/oder (III)

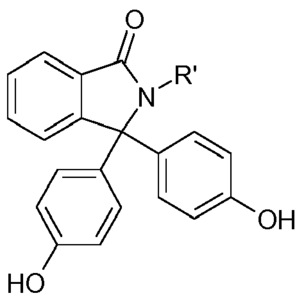
(I)

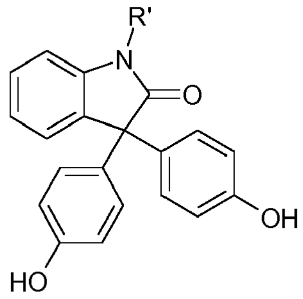
(II)

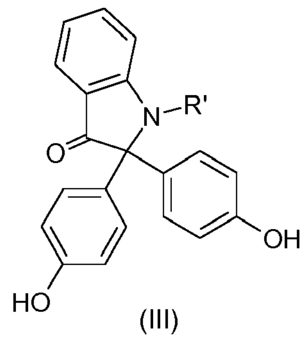
(III) ,

in denen R' jeweils für $C_1$- bis $C_4$-Alkyl, Aralkyl oder Aryl, bevorzugt für Methyl oder Phenyl, ganz besonders bevorzugt für Methyl, steht,
abgeleitete Homo- oder Copolycarbonate, insbesondere mit Bisphenol A.

Die verwendeten Dihydroxyarylverbindungen, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Bevorzugt sind auch Copolycarbonate mit einer oder mehreren Monomereinheiten eines Siloxans der allgemeinen Formel (IV)

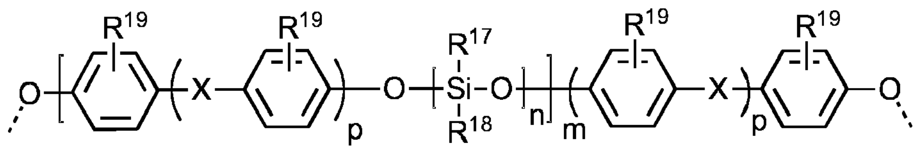
(IV)

,

in der

$R^{19}$ für Wasserstoff, Cl, Br oder einen $C_1$- bis $C_4$-Alkylrest, vorzugsweise für Wasserstoff oder einen Methylrest, besonders bevorzugt für Wasserstoff, steht,

$R^{17}$ und $R^{18}$ gleich oder verschieden sind und unabhängig voneinander für einen Arylrest, einen $C_1$- bis $C_{10}$-Alkylrest oder einen $C_1$- bis $C_{10}$-Alkylarylrest, bevorzugt jeweils für einen Methylrest, stehen und wobei

X eine Einfachbindung, -CO-, -O-, ein $C_1$- bis $C_6$-Alkylenrest, ein $C_2$- bis Cs-Alkylidenrest, ein $C_5$- bis $C_{12}$-Cycloalkylidenrest oder ein $C_6$- bis $C_{12}$-Arylenrest ist, der optional mit weiteren aromatischen Ringen kondensiert sein kann, welche Heteroatome enthalten, wobei X bevorzugt eine Einfachbindung, ein $C_1$- bis $C_5$-Alkylenrest, ein $C_2$- bis Cs-Alkylidenrest, ein $C_5$- bis $C_{12}$-Cycloalkylidenrest, -O- oder -CO- ist, weiter bevorzugt eine Einfachbindung, ein Isopropylidenrest, ein $C_5$- bis $C_{12}$-Cycloalkylidenrest oder -O- ist, ganz besonders bevorzugt ein Isopropylidenrest, ist,

n eine Zahl von 1 bis 500, vorzugsweise von 10 bis 400, besonders bevorzugt von 10 bis 100, ganz besonders bevorzugt von 20 bis 60, ist,

m eine Zahl von 1 bis 10, bevorzugt von 1 bis 6, besonders bevorzugt von 2 bis 5, ist,

p 0 oder 1, bevorzugt 1, ist,

und der Wert von n mal m vorzugsweise zwischen 12 und 400, weiter bevorzugt zwischen 15 und 200 liegt,

wobei das Siloxan bevorzugt mit einem Polycarbonat in Gegenwart eines organischen oder anorganischen Salzes einer schwachen Säure mit einem $pK_A$ Wert von 3 bis 7 (25°C) umgesetzt wird.

Copolycarbonate mit Monomereinheiten der Formel (IV) und insbesondere auch deren Herstellung sind in der WO 2015/052106 A2 beschrieben.

Der Gesamtanteil der Monomereinheiten beruhend auf den Formeln (I), (II), (III), 4,4'-Dihydroxydiphenyl und/oder Bisphenol TMC im Copolycarbonat beträgt vorzugsweise 0,1 - 88 mol-%, besonders bevorzugt 1 - 86 mol-%, ganz besonders bevorzugt 5 - 84 mol-% und insbesondere 10 - 82 mol-% (bezogen auf die Summe der Mole eingesetzter Dihydroxyarylverbindungen).

Die Copolycarbonate können als block- und statistisches Copolycarbonat vorliegen. Besonders bevorzugt sind statistische Copolycarbonate.

Dabei ergibt sich das Verhältnis der Häufigkeit der Diphenolat-Monomereinheiten im Copolycarbonat aus dem Molverhältnis der eingesetzten Dihydroxyarylverbindungen.

Die relative Lösungsviskosität der Copolycarbonate, bestimmt nach ISO 1628-4:1999, liegt bevorzugt im Bereich von = 1,15 - 1,35.

Die zur Regelung des Molekulargewichtes benötigten monofunktionellen Kettenabbrecher, wie Phenole oder Alkylphenole, insbesondere Phenol, p-tert. Butylphenol, iso-Octylphenol, Cumylphenol, deren Chlorkohlensäureester oder Säurechloride von Monocarbonsäuren bzw. Gemische aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind, bzw. im Falle der Säurechloride und Chlorkohlensäureester als Kettenabbrecher, solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wenn kein Phosgen mehr vorliegt, aber der Katalysator noch nicht dosiert wurde, bzw. sie werden vor dem Katalysator, mit dem Katalysator zusammen oder parallel zudosiert.

In der gleichen Weise werden eventuell zu verwendende Verzweiger oder Verzweigermischungen der Synthese zugesetzt, üblicherweise jedoch vor den Kettenabbrechern. Üblicherweise werden Trisphenole, Quarterphenole oder Säurechloride von Tri- oder Tetracarbonsäuren verwendet oder auch Gemische der Polyphenole oder der Säurechloride.

Einige der als Verzweiger verwendbaren Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tris-(4-hydroxyphenyl)-benzol, 1,1,1-Tri-(4-hydroxyphenyl)-ethan, Tris-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die Menge der gegebenenfalls einzusetzenden Verzweiger beträgt 0,05 Mol-% bis 2 Mol-%, bezogen wiederum auf Mole an jeweils eingesetzten Dihydroxyarylverbindungen.

Die Verzweiger können entweder mit den Dihydroxyarylverbindungen und den Kettenabbrechern in der wässrigen alkalischen Phase vorgelegt werden oder in einem organischen Lösungsmittel gelöst vor der Phosgenierung zugegeben werden.

Alle diese Maßnahmen zur Herstellung der Polycarbonate sind dem Fachmann geläufig.

Für die Herstellung der Polyestercarbonate geeignete aromatische Dicarbonsäuren sind beispielsweise Orthophthalsäure, Terephthalsäure, Isophthalsäure, tert-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Bevorzugte Herstellungsweisen der erfindungsgemäß zu verwendenden Polycarbonate, einschließlich der Polyestercarbonate, sind das bekannte Grenzflächenverfahren und das bekannte Schmelzeumesterungsverfahren (vgl. z. B. WO 2004/063249 A1, WO 2001/05866 A1, US 5,340,905 A, US 5,097,002 A, US-A 5,717,057 A).

Im ersten Fall dienen als Säurederivate vorzugsweise Phosgen und gegebenenfalls Dicarbonsäuredichloride, im letzteren Fall vorzugsweise Diphenylcarbonat und gegebenenfalls Dicarbonsäurediester. Katalysatoren, Lösungsmittel, Aufarbeitung, Reaktionsbedingungen etc. für die Polycarbonatherstellung bzw. Polyestercarbonatherstellung sind

in beiden Fällen hinreichend beschrieben und bekannt.

Zusammensetzungen auf Basis von Polycarbonat sind solche Zusammensetzungen, deren Basismaterial, d.h. überwiegend vorhandene Komponente, ein Polycarbonat ist. "Überwiegend" bedeutet hierbei mindestens 60 Gew.-%, bevorzugt mindestens 60 Gew.-%, weiter bevorzugt mindestens 70 Gew.-%, besonders bevorzugt mindestens 74 Gew.-%, ganz besonders bevorzugt mindestens 90 Gew.-% aromatisches Polycarbonat, bezogen auf die Gesamtzusammensetzung.

Grundsätzlich sind Schmelzevolumenfließraten in einem weiten Bereich möglich, etwa von 5 bis 40 $cm^3$/(10 min), bestimmt nach DIN EN ISO 1133:1-2012-03. Bevorzugt beträgt die Schmelzevolumenfließrate MVR der Zusammensetzung auf Basis von aromatischem Polycarbonat 5 bis 35 $cm^3$/(10 min), weiter bevorzugt 5 bis 20 $cm^3$/(10 min). Besonders bevorzugt beträgt die Schmelzevolumenfließrate MVR der Zusammensetzung auf Basis von aromatischem Polycarbonat, bestimmt nach DIN EN ISO 1133:1-2012-03, 5 bis 15 $cm^3$/(10 min), ganz besonders bevorzugt 6 bis 12 $cm^3$/(10 min). Entsprechende Materialien sind beispielsweise Makroion® 2608 oder Makroion® 3108 der Covestro Deutschland AG.

Die Zusammensetzungen der Leitschicht, aber auch der ggf. vorhandenen weiteren Schichten auf Basis von Polycarbonat, wie etwa Coextrusionsschichten, können optional ein oder mehrere Additive enthalten. Solche sind z.B. in EP-A 0 839 623, WO-A 96/15102, EP-A 0 500 496 oder "Plastics Additives Handbook", Hans Zweifel, 5th Edition 2000, Hanser Verlag, München beschrieben, z.B. Entformer, UV-Absorber, Thermostabilisatoren, Flammschutzmittel, Antistatika und/oder Fließverbesserer.

Bevorzugt enthält die auf aromatischem Polycarbonat basierende Zusammensetzung mindestens einen UV-Absorber.

Folgende Ultraviolett-Absorber sind beispielsweise geeignet: Hydroxy-Benzotriazole, wie 2-(3',5'-Bis-(1,1-dimethylbenzyl)-2'-hydroxy-phenyl)-benzotriazol (Tinuvin® 234, BASF AG. Ludwigshafen), 2-(2'-Hydroxy-5'-(tert.-octyl)-phenyl)-benzotriazol (Tinuvin® 329, BASF AG. Ludwigshafen), 2-(2'-Hydroxy-3'-(2-butyl)-5'-(tert.butyl)-phenyl)-benzotriazol (Tinuvin® 350, BASF SE, Ludwigshafen), Bis-(3-(2H-benztriazolyl)-2-hydroxy-5-tert.-octyl)methan, (Tinuvin® 360, BASF SE, Ludwigshafen), (2-(4,6-Diphenyl-1,3,5-triazin-2-yl)-5-(hexyloxy)-phenol (Tinuvin® 1577, BASF SE, Ludwigshafen), die Benzophenone 2,4-Dihydroxy-benzophenon (Chimasorb® 22, BASF SE, Ludwigshafen) oder 2-Hydroxy-4-(octyloxy)-benzophenon (Chimassorb® 81, BASF SE, Ludwigshafen), 2-Cyano-3,3-diphenyl-2-propensäure, 2,2-Bis[[(2-cyano-1-oxo-3,3-diphenyl-2-propenyl)oxy]-methyl]-1,3-propandiylester (9CI) (Uvinul® 3030, BASF SE, Ludwigshafen), 2-[2-Hydroxy-4-(2-ethylhexyl)oxy]phenyl-4,6-di(4-phenyl)phenyl-1,3,5-triazin (CGX UVA 006, BASF SE, Ludwigshafen) oder Tetraethyl-2,2'-(1,4-phenylen-dimethyliden)-bismalonat (Hostavin® B-Cap, Clariant AG). Es können auch Mischungen dieser Ultraviolett-Absorber eingesetzt werden.

Sofern eine Coextrusionsschicht vorhanden ist, enthält diese bevorzugt mindestens einen UV-Absorber. Bevorzugte UV-Absorber für die Coextrusionsschicht sind 2-[2-Hydroxy-4-(2- ethylhexyl)oxy]phenyl-4,6-di(4-phenyl)phenyl-1,3,5-triazin (CGX UVA 006 oder Tinuvin® 1600, BASF SE, Ludwigshafen), (2-(4,6-Diphenyl-1,3,5-triazin-2-yl)-5-(hexyloxy)-phenol (Tinuvin® 1577, BASF SE, Ludwigshafen) oder Bis-(3-(2H-benztriazolyl)-2-hydroxy-5-tert.-octyl)methan, (Tinuvin® 360, BASF SE, Ludwigshafen).

Alternativ oder zusätzlich, besonders bevorzugt zusätzlich, enthält die Zusammensetzung der Leitschicht oder einer anderen auf Polycarbonat basierenden Schicht bevorzugt mindestens einen Thermo- bzw. Verarbeitungsstabilisator.

Als solche bevorzugt sind Phosphite und Phosphonite sowie Phosphine. Beispiele sind Triphenylphosphit, Diphenylalkylphosphit, Phenyldialkylphosphit, Tris(nonylphenyl)phosphit, Trilaurylphosphit, Trioctadecylphosphit, Distearylpentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,4-di-cumylphenyl)pentaerythritoldiphosphit, Bis(2,6-di-tert-butyl-4-methylphenyl)penta-erythritol-diphosphit, Diisodecyloxypentaerythritoldiphosphit, Bis(2,4-di-tert-butyl-6-methylphenyl)-pentaerythritoldiphosphit, Bis(2,4,6-tris(tert-butylphenyl)pentaerythritoldiphosphit, Tristearylsorbitoltriphosphit, Tetrakis(2,4-di-tert-butylphenyl)-4,4'-biphenylendiphosphonit, 6-Isooctyloxy-2,4,8,10-tetra-tert-butyl-12H-dibenz[d,g]-1,3,2-dioxaphosphocin, Bis(2,4-di-tert-butyl-6-methylphenyl)methylphosphit, Bis(2,4-di-tert-butyl-6-methylphenyl)ethylphosphit, 6-Fluoro-2,4,8,10-tetra-tert-butyl-12-methyl-dibenz[d,g]-1,3,2-dioxaphosphocin, 2,2',2"-Nitrilo-[triethyltris(3,3',5,5'-tetra-tert-butyl-1,1'-biphenyl-2,2'-diyl)phosphit], 2-Ethylhexyl(3,3',5,5'-tetra-tert-butyl-1,1'-biphenyl-2,2'-diyl)phosphit, 5-Butyl-5-ethyl-2-(2,4,6-tri-tert-butylphenoxy)-1,3,2-dioxaphosphiran, Bis(2,6-di-ter-butyl-4-methylphenyl)pentaerythritol-diphosphit, Triphenylphosphin (TPP), Trialkylphenylphosphin, Bisdiphenylphosphino-ethan oder ein Trinaphthylphosphin. Insbesondere bevorzugt werden Triphenylphosphin (TPP), Irgafos® 168 (Tris(2,4-di-tert-butylphenyl)-phosphit) oder Tris(nonylphenyl)phosphit oder deren Mischungen eingesetzt. Ferner können Alkylphosphate z. B. Mono-, Di- und Trihexylphosphat, Triisoctylphosphat und Trinonylphosphat eingesetzt werden.

Ferner können phenolische Antioxidantien wie alkylierte Monophenole, alkylierte Thioalkylphenole, Hydrochinone und alkylierte Hydrochinone eingesetzt werden. Besonders bevorzugt werden Irganox® 1010 (Pentaerythrit- 3-(4-hydroxy-3,5-di-tert-butylphenyl)propionat; CAS: 6683-19-8) und/oder Irganox 1076® (2,6-Di-tert-butyl-4-(octadecanoxycarbonylethyl)phenol) eingesetzt.

Ebenso bevorzugt alternativ oder zusätzlich enthält die Zusammensetzung ein Entformungsmittel, bevorzugt auf Basis eines Fettsäureesters, weiter bevorzugt auf Basis eines Stearinsäureesters, insbesondere bevorzugt auf Pentaerythritbasis. Bevorzugt werden Pentaerythrittetrastearat (PETS) und/oder Glycerinmonostearat (GMS) eingesetzt.

Bevorzugt weist die Leitschicht eine Höhe zwischen 2 und 6 mm, insbesondere zwischen 3 und 4 mm, auf, wobei die Erhebungen eine Höhe zwischen 0,4 und 2 mm, bevorzugt zwischen 0,5 und 1 mm, insbesondere zwischen 0,50 und 0,65 mm, aufweisen und wobei der Radius des kuppelförmigen Körpers auf der halben Höhe des kuppelförmigen Körpers in einem Bereich zwischen 0,25 und 0,75 mm, insbesondere zwischen 0,30 und 0,50 mm, liegt. Eine derartige Dimensionierung der Leitschicht lässt sich auf bekannten Produktionslinien zuverlässig extrudieren und bietet eine ausreichende Grundfläche der einzelnen Strukturen für eine Reduktion der psychologischen Blendung. Der kuppelförmige Körper setzt sich aus den Übergangsbereichen und der Kuppel zusammen, so dass die Höhe des kuppelförmigen Körpers von der Grundfläche der sich an den prismenförmigen Grundkörper anschließenden Übergangsbereiche bis zur Spitze der Kuppel berechnet wird.

Die Erhebungen weisen bevorzugt eine Höhe zwischen 0,4 und 2 mm, weiter bevorzugt zwischen 0,5 und 1 mm, insbesondere zwischen 0,50 und 0,65 mm, auf. Dabei liegt der Radius des kuppelförmigen Körpers bevorzugt auf der halben Höhe des kuppelförmigen Körpers in einem Bereich zwischen 0,25 und 0,75 mm, insbesondere zwischen 0,30 und 0,50 mm.

Die Leitschicht kann eine Schicht aus einem einzigen Material sein oder aber eine Schicht aus verschiedenen übereinander angeordneten Materialien. Im zweitgenannten Fall kann es sich insbesondere um eine Kombination aus einer Substratschicht und mindestens einer Coextrusionsschicht handeln. Sofern die Erhebungen in die Coextrusionsschicht eingeprägt sind bzw. Teil der Coextrusionsschicht sind, reichen die Erhebungen auch in die darunterliegende Schicht, üblicherweise die Substratschicht, da die Coextrusionsschichten jeweils bevorzugt eine Dicke in einem Bereich von 40 bis 100 μm, besonders bevorzugt eine Dicke in einem Bereich von 45 bis 60 μm aufweisen. Die Leitschicht umfasst dann die Coextrusionsschicht mit den Erhebungen und die Substratschicht. Die Leitschicht kann auch eine auf einer Substratschicht angeordnete Schicht sein, etwa eine, die durch Spritzguss auf die Substratschicht aufgebracht wurde. Sofern die Leitschicht eine auf einer Substratschicht angeordnete Schicht ist oder die Substratschicht selbst, gilt bevorzugt die Kombination aus oben genannten bevorzugten Höhen für Erhebungen und für die Höhe der Leitschicht. Sofern die Leitschicht eine Kombination aus einer Coextrusionsschicht und einer Substratschicht ist, gelten zwar auch bevorzugt die genannten Höhen für die Erhebungen und die genannten Höhen für die Coextrusionsschicht, dann aber bevorzugt dazu noch die nachfolgend für die Substratschicht als bevorzugt genannten Höhen.

Die Substratschicht weist bevorzugt eine Dicke in einem Bereich von 0,5 bis 10 mm, bevorzugt 1 bis 8 mm, weiter bevorzugt 2 bis 6 mm, besonders bevorzugt 2,0 bis 6,0 mm, auf.

Bevorzugt besteht die Substratschicht aus einer Zusammensetzung auf Basis von aromatischem Polycarbonat. Die Substratschicht kann aber auch aus einer Zusammensetzung auf Basis von PMMA oder auf Basis einer Mischung aus aromatischem Polycarbonat und PMMA bestehen.

Besonders bevorzugt bestehen die Substratschicht und die Coextrusionsschicht jeweils aus einer Zusammensetzung auf Basis von aromatischem Polycarbonat, wobei das Polycarbonat der Substratschicht bevorzugt ein höheres gewichtsmittleres Molekulargewicht als das Polycarbonat der Coextrusionsschicht aufweist. Alternativ oder additiv hierzu ist der MVR-Wert, bestimmt nach DIN EN ISO 1133-1:2012-03 (300°C, 1,2 kg), der Zusammensetzung der Substratschicht niedriger als der der Coextrusionsschicht. Somit weist die Zusammensetzung der Substratschicht also eine niedrigere Fließfähigkeit auf als die Zusammensetzung der Leitschicht.

Bevorzugt ist die optische Lichtleitplatte einschichtig ausgebildet. Also ist die Leitschicht derart extrudiert, dass die kugelförmigen Erhebungen nach einem Extrudierschritt in die Leitschicht eingeprägt sind.

Das zuvor aufgeführte technische Problem wird ebenfalls gelöst durch die Verwendung einer optischen Lichtleitplatte nach einem der Ansprüche 1 bis 14 in einer Leuchtvorrichtung, wobei die Leuchtvorrichtung als Lichtquelle zumindest eine, bevorzugte mehrere, LEDs aufweist.

Im Folgenden wird die Erfindung anhand von Ausführungsbeispielen mit Bezug auf die Zeichnung erläutert. In der Zeichnung zeigen

| | |
|---|---|
| Fig. 1 | eine perspektivische Darstellung einer gegenständlichen Lichtleitplatte, |
| Fig. 2 | eine perspektivische Darstellung einer hubbelförmigen Erhebung einer gegenständlichen Lichtleitplatte, |
| Fig. 3 | eine Darstellung einer Mantellinie eines kuppelförmigen Körpers einer Erhebung der gegenständlichen Lichtleitplatte in einem kartesischem Koordinatensystem, |
| Fig. 4a | eine Schnittansicht eines kuppelförmigen Körpers einer Erhebung der gegenständlichen Lichtleitplatte, |

Fig. 4b perspektivische Darstellungen von drei unterschiedlichen Ausführungsbeispielen der kuppelförmigen Körper der gegenständlichen Lichtleitplatte,

Fig. 5a bis 5c UGR-Tabellen der in Fig. 4b dargestellten Ausführungsbeispiele A, B sowie C der kuppelförmigen Körper der gegenständlichen Lichtleitplatte, und

Fig. 6 Leuchtmuster der in Fig. 4b dargestellten Ausführungsbeispiele der kuppelförmigen Körper der gegenständlichen Lichtleitplatte.

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

Fig. 1 zeigt eine perspektivische Darstellung einer gegenständlichen Lichtleitplatte 1. Dabei ist erkennbar, dass die Lichtleitplatte 1 eine Leitschicht 3 aufweist, die sich aus insgesamt 25 hubbelförmigen Erhebungen 2 zusammensetzt, wobei jeweils fünf Erhebungen 2 in insgesamt fünf Reihen angeordnet sind. Eine Erhebung 2 setzt sich dabei aus einem vierseitigen und gleichseitigen Prisma 4 sowie einem sich an das Prisma anschließenden, kuppelförmigen Körpers 6 zusammen.

In Fig. 2 ist eine Erhebung 2 in einer perspektivischen Detailansicht dargestellt. Im Gegensatz zu der in Fig. 1 dargestellten Erhebung 2 weist die in Fig. 2 dargestellte Erhebung 2 ein sechsseitiges und gleichseitiges Prisma 4 als Grundkörper auf. An das Prisma 4 schließt sich ein Übergangsbereich 8 an. Der Übergangsbereich setzt 8 sich aus Kreissegmenten 10, welche sich unmittelbar an die Seitenflächen des Prismas 4 anschließen sowie aus Fortsätzen 12 des kuppelförmigen Körpers 6 zusammen, wobei die Fortsätze 12 des kuppelförmigen Körpers 6 durch die Kreissegmente 10 begrenzt werden. Die Erhebung 2 ist entlang einer Achse Y, die senkrecht zu der Lichtleitplatte 1 durch die Spitze 14 der Erhebung 2 bzw. des Körpers 6 oder der Kuppel verläuft, drehsymmetrisch mit einem Winkel von 60° ausgebildet. Die Mantelfläche 7 des kuppelförmigen Körpers 6 ist mit Ausnahme des Übergangsbereichs 8 rotationssymmetrisch um die Achse Y ausgebildet. Exemplarisch ist weiterhin eine Mantellinie 16 des kuppelförmigen Körpers 6 dargestellt, die von einem Fußpunkt 17 bis zur Spitze 14 verläuft. Der Verlauf einer solchen Mantellinie 16 ist in Fig. 3 detailliert dargestellt.

Dabei korrespondiert die in Fig. 3 dargestellte Achse Y zu der in Fig. 2 dargestellten Achse Y. Die Mantellinie 16 setzt sich aus insgesamt zwei Spline-Segmenten 18 und 20 zusammen, wobei das erste Spline-Segment 18 von einem ersten Kontrollpunkt $K_1$ bis zu einem zweiten Kontrollpunkt $K_2$ verläuft. Die Koordinaten des ersten Kontrollpunkts $K_1$ lauten $(0;y_1)$, wobei $y_1$ bevorzugt Element aus dem Intervall [0,55;0,95] ist. Der zweite Kontrollpunkt $K_2$ weist die Koordinaten $(y_1/2 + \Delta x;y_1/2)$ auf, wobei $\Delta x$ bevorzugt Element des Intervalls [0,005;0,25] ist. Die Tangentensteigung des ersten Spline-Segments 18 und des zweiten Spline-Segments 20 sind in dem zweiten Kontrollpunkt $K_2$ identisch. Das erste Spline-Segment 18 wird durch folgende Funktion definiert:

$$f_1(x) = a_1(x-x_1)^3 + b_1(x-x_1)^2 + c_1(x-x_1) + d_1.$$

Das zweite Spline-Segment 20 verläuft von dem zweiten Kontrollpunkt $K_2$ zu einem dritten Kontrollpunkt $K_3$. Der dritte Kontrollpunkt weist bevorzugt die Koordinaten (1;0) auf. Das zweite Spline-Segment wird durch folgende Funktion definiert:

$$f_2(x) = a_2(x-x_2)^3 + b_2(x-x_2)^2 + c_2(x-x_2) + d_2.$$

Eine derartige Ausgestaltung der Mantellinie 16 des kuppelförmigen Körpers 6 hat sich als besonders vorteilhaft für die optischen Eigenschaften der Lichtleitplatte 1 erwiesen. Bevorzugt entspricht eine Einheit in dem dargestellten Koordinatensystem 1 mm.

Fig. 4a zeigt eine Schnittdarstellung eines kuppelförmigen Körpers 6 der gegenständlichen Lichtleitplatte 1. Dabei gibt $h_1$ die Höhe des gesamten kuppelförmigen Körpers 6 an. Diese beträgt vorliegend 0,52 mm. Das Bezugszeichen r gibt den Radius des kuppelförmigen Körpers 6 auf der halben Höhe des Körpers 6 an. Der Radius r beträgt vorliegend 0,63 mm. Der Parameter 1 gibt die Länge der Grundfläche der Erhebung 2 bzw. des Körpers 6 an und beträgt vorliegend 1,5 mm. Der Parameter $h_2$ gibt die Höhe des Kreissegmente 10 an und beträgt vorliegend 0,15 mm.

Fig. 4b zeigt drei unterschiedliche Ausführungen des kuppelförmigen Körpers 6 der gegenständlichen Lichtleitplatte 1. Dabei beträgt die Länge 1 einer Seite der Grundfläche des Körpers 6 bei allen Ausführungen 1 mm. Für das

Ausführungsbeispiel A gilt r = 0,35355 mm und $h_1$ = 0.55 mm. Das Ausführungsbeispiel B weist eine Höhe $h_1$ von 0,6 mm und einen Radius r von 0,42855 mm auf. Für das Ausführungsbeispiel C gilt $h_1$ = 0,625 mm und r = 0,47855 mm.

Fig. 5a bis 5c gibt die UGR-Tabellen der in Fig. 4b dargestellten Ausführungsbeispiele der kuppelförmigen Körper 6 der gegenständlichen Lichtleitplatte 1 an. Die in Fig. 5a dargestellte Tabelle gibt die UGR-Werte für das Ausführungsbeispiel A an, die in Fig. 5b dargestellte Tabelle gibt die UGR-Werte für das Ausführungsbeispiel B an und die in Fig. 5c dargestellte Tabelle gibt die UGR-Werte für das Ausführungsbeispiel C an. Es ist erkennbar, dass die Anforderungen an einen UGR-Wert $\leq$ 19 durch alle Ausführungsbeispiele des kuppelförmigen Körper 6 der Lichtleitplatte 1 erfüllt werden. Die üblicherweise anzugebenden UGR-Werte betragen für das Ausführungsbeispiel A 13,5, für das Ausführungsbeispiel B 13,7 und für das Ausführungsbeispiel C 14.

Diese UGR-Tabellen wurden mit dem LTD Editor 1.2 der Dial GmbH berechnet, wobei das simulierte Strahlungsmuster einer prismenförmigen Lichtleitplatte bei einem emittierten Lichtstrom von 4000 Lumen, welcher von einer 600 mal 600 $mm^2$ Leuchte emittiert wurde, verwendet wurde. Zur Berechnung der UGR-Werte wurde die CIE 117-1995 Norm verwendet.

In Fig. 6 sind die Leuchtmuster der in Fig. 4b dargestellten Ausführungsbeispiele der kuppelförmigen Körper 6 der gegenständlichen Lichtleitplatte 1 dargestellt. Es ist erkennbar, dass die kuppelförmige Ausgestaltung der Erhebungen 2 das Licht von der Achse Y in verschiedenen Winkeln weg reflektiert. Bei Ausführungsbeispiel A entsteht ein schmales ringförmiges Lichtmuster, wohingegen das Lichtmuster bei Ausführungsbeispiel B als breites ringförmiges Muster ausgebildet ist. Das Lichtmuster des Ausführungsbeispiels C ist weiter gestreut und im Wesentlichen trapezförmig ausgebildet.

Bei einem Vergleich der Ausführungsbeispiele untereinander ist erkennbar, dass eine Zunahme der Krümmung der Mantellinie 16 auch zu einer Zunahme des UGR-Wertes führt. Wie an den Leuchtmustern allerdings erkennbar ist, führt dieses gleichfalls auch zu einem besseren Peak-Shielding. Je nach Anwendungsbereich der Lichtleitplatte 1 kann dann eine Abwägung zwischen den verschiedenen Ausgestaltungen der Mantellinie 16 des kuppelförmigen Körpers 6 getroffen werden.

## Patentansprüche

1. Eine optische Lichtleitplatte umfassend
zumindest eine Leitschicht (3) aus einem thermoplastischen und transparenten Kunststoff,
wobei die Leitschicht (3) auf einer einer Lichtquelle abgewandten Seite der Lichtleitplatte (1) eine lichtbrechende Struktur aufweist,
wobei die Struktur aus einer Mehrzahl an hubbelförmigen Erhebungen (2) gebildet ist,
wobei die Erhebungen (2) jeweils einen prismenförmigen Grundkörper (4) aufweisen,
wobei sich an den Grundkörper (4) ein kuppelförmiger Körper (6) umfassend eine Spitze (14) anschließt und
wobei die Mantellinien (16) des kuppelförmigen Körpers (6) in Form von kubischen Splines (18, 20) mit zumindest drei Kontrollpunkten ($K_1$, $K_2$, $K_3$) ausgebildet sind.

2. Optische Lichtleitplatte nach Anspruch 1,
**dadurch gekennzeichnet,**
**dass** der Grundkörper (4) als dreiseitiges, vierseitiges, fünfseitiges oder sechsseitiges Prisma mit einer gleichseitigen Grundfläche ausgebildet ist.

3. Optische Lichtleitplatte nach Anspruch 2,
**dadurch gekennzeichnet,**
**dass** die Grundfläche des Prismas (4) einen Flächeninhalt zwischen 0,05 $mm^2$ und 4 $mm^2$ aufweist.

4. Optische Lichtleitplatte nach einem der Ansprüche 1 bis 3,
**dadurch gekennzeichnet,**
**dass** der kuppelförmige Körper (6) mit Ausnahme von sich an den Grundkörper (4) anschließenden Übergangsbereichen (8) eine im Wesentlichen rotationssymmetrische Mantelfläche (7) aufweist.

5. Optische Lichtleichtplatte nach einem der Ansprüche 1 bis 4,
**dadurch gekennzeichnet,**
**dass** die Erhebungen (2) eine Drehsymmetrie aufweisen.

6. Optische Lichtleitplatte nach einem der Ansprüche 1 bis 5,
**dadurch gekennzeichnet,**

**dass** die Mantellinien (16) des kuppelförmigen Körpers jeweils in Form von zwei kubischen Splines (18, 20) mit drei Kontrollpunkten ($K_1$, $K_2$, $K_3$) ausgebildet sind,
wobei der erste kubische Spline (18) von einem ersten Kontrollpunkt ($K_1$) des Körpers (6) bis zu einem zweiten Kontrollpunkt ($K_2$) des Körpers (6) verläuft und
wobei der zweite kubische Spline (20) von einem zweiten Kontrollpunkt ($K_2$) des Körpers (6) bis zu einem dritten Kontrollpunkt ($K_3$) des Körpers (6) verläuft.

**7.** Optische Lichtleitplatte nach Anspruch 6,
**dadurch gekennzeichnet,**
**dass** der erste Kontrollpunkt ($K_1$) durch die Spitze (14) des kuppelförmigen Körpers (6) definiert ist und
**dass** der dritte Kontrollpunkt ($K_3$) durch den Fußpunkt (17) der jeweiligen Mantellinie (16) definiert ist.

**8.** Optische Lichtleitplatte nach Anspruch 6 oder 7,
**dadurch gekennzeichnet,**
**dass** der Verlauf des ersten kubischen Splines (18) durch folgende Formel definiert ist:

$$f_1(x) = a_1(x-x_1)^3 + b_1(x-x_1)^2 + c_1(x-x_1) + d_1$$

und dass der Verlauf des zweiten kubischen Splines (20) durch folgende Formel definiert ist:

$$f_2(x) = a_2(x-x_2)^3 + b_2(x-x_2)^2 + c_2(x-x_2) + d_2.$$

**9.** Optische Lichtleitplatte nach Anspruch 8,
**dadurch gekennzeichnet,**
**dass** folgende Bedingungen zutreffen:

$$f_1(0) = y_1; f_2(1) = 0; f_1'(1) = f_2'(0); f_1''(0) = 0 \text{ und } f_2''(1) = 0.$$

**10.** Optische Lichtleitplatte nach einem der Ansprüche 6 bis 9,
**dadurch gekennzeichnet,**
**dass** für den ersten Kontrollpunkt gilt: $K_1 = (0;y_1)$,
**dass** für den zweiten Kontrollpunkt gilt: $K_2 = (y_1/2+\Delta x;y_1/2)$ und,
**dass** für den dritten Kontrollpunkt gilt: $K_3 = (1;0)$,
wobei $y_1 \in [0,5;0,95]$ und wobei $\Delta x \in [0,05;0,25]$.

**11.** Optische Lichtleitplatte nach einem der Ansprüche 1 bis 9,
**dadurch gekennzeichnet,**
**dass** die Leitschicht (3) aus einer Zusammensetzung auf Basis von aromatischem Polycarbonat besteht.

**12.** Optische Lichtleitplatte nach Anspruch 11,
**dadurch gekennzeichnet,**
**dass** das aromatische Polycarbonat ein gewichtsmittleres Molekulargewicht $M_w$ von 15.000 g/mol bis 34.000 g/mol, vorzugsweise von 17.000 g/mol bis 33.000 g/mol, besonders bevorzugt von 19.000 g/mol bis 32.000 g/mol, ganz besonders bevorzugt von 22.000 bis 30.000 g/mol aufweist.

**13.** Optische Lichtleitplatte nach einem der Ansprüche 1 bis 12,
**dadurch gekennzeichnet,**
**dass** die optische Lichtleitplatte (1) eine zusätzliche Substratschicht bestehend aus einer Zusammensetzung auf Basis von aromatischem Polycarbonat aufweist,
wobei das aromatische Polycarbonat der Substratschicht ein höheres gewichtsmittleres Molekulargewicht als das Polymer der Leitschicht aufweist.

**14.** Optische Lichtleitplatte nach einem der Ansprüche 1 bis 13,
**dadurch gekennzeichnet,**

**dass** die Leitschicht (3) eine Dicke zwischen 2 und 8 mm, insbesondere zwischen 3 und 4 mm, aufweist,
**dass** die Erhebungen (2) eine Höhe zwischen 0,4 und 2 mm, insbesondere zwischen 0,5 und 1 mm, aufweisen und
**dass** der Radius (r) des kuppelförmigen Körpers (6) auf der halben Höhe des Körpers (6) in einem Bereich zwischen 0,25 und 0,75 mm liegt.

**15.** Verwendung einer optischen Lichtleitplatte nach einem der Ansprüche 1 bis 14 in einer Leuchtvorrichtung, wobei die Leuchtvorrichtung als Lichtquelle zumindest eine LED aufweist.

Fig. 1

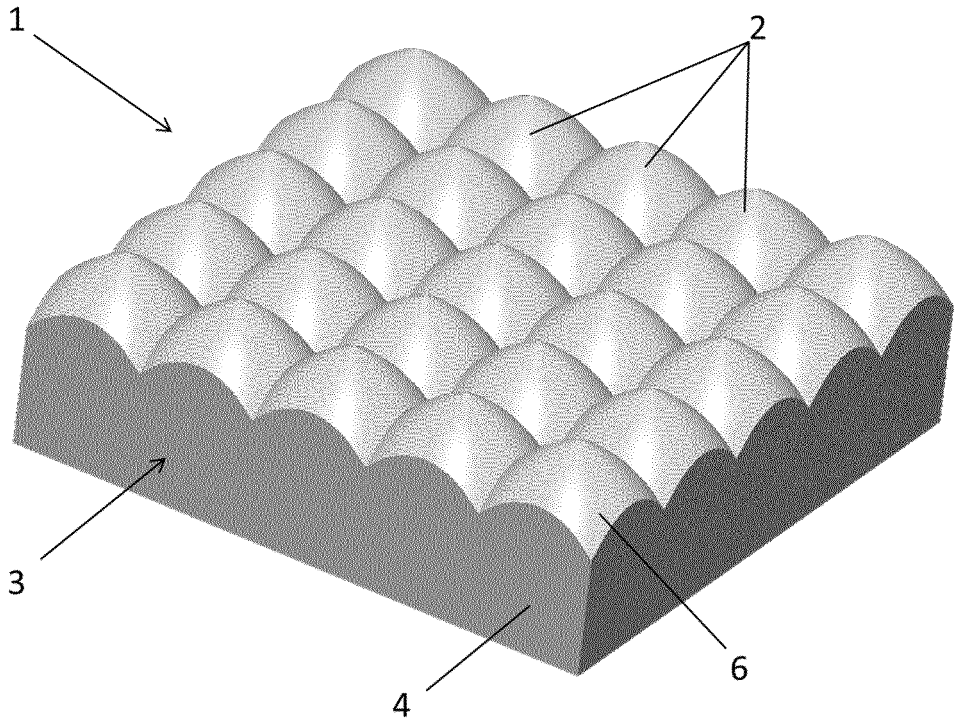


Fig. 2

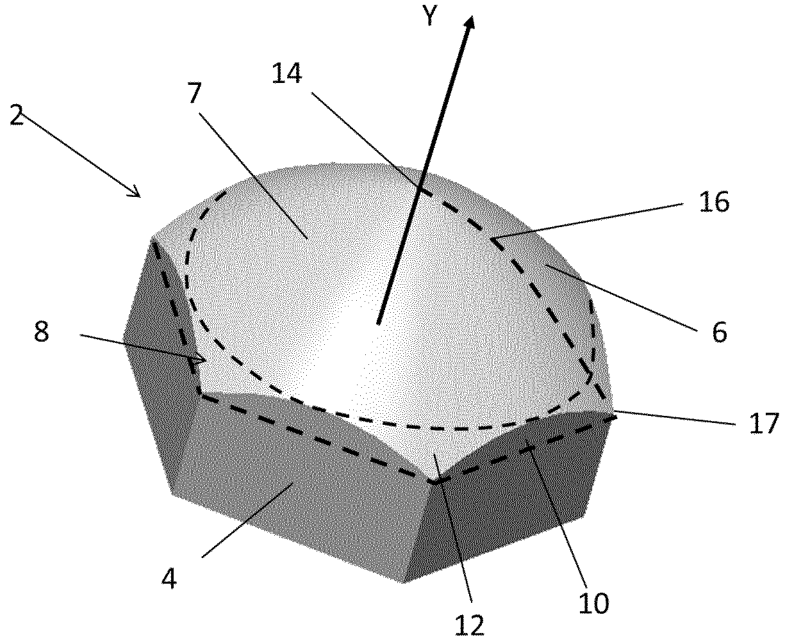

Fig. 3

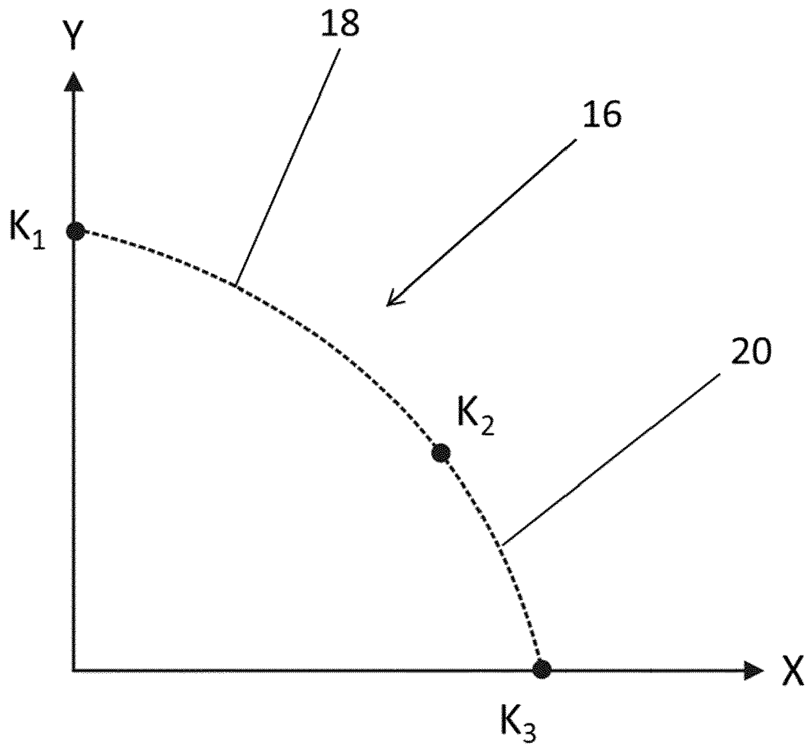


Fig. 4a

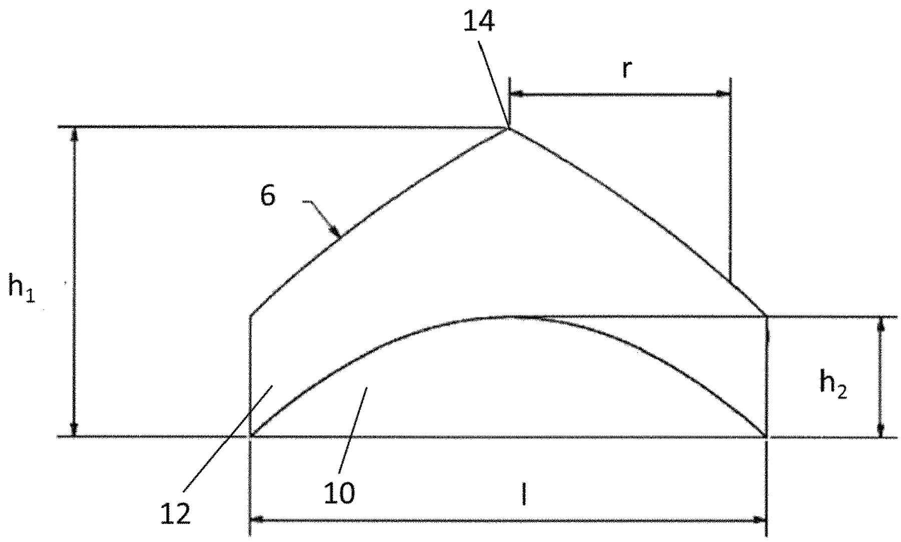

Fig. 4b

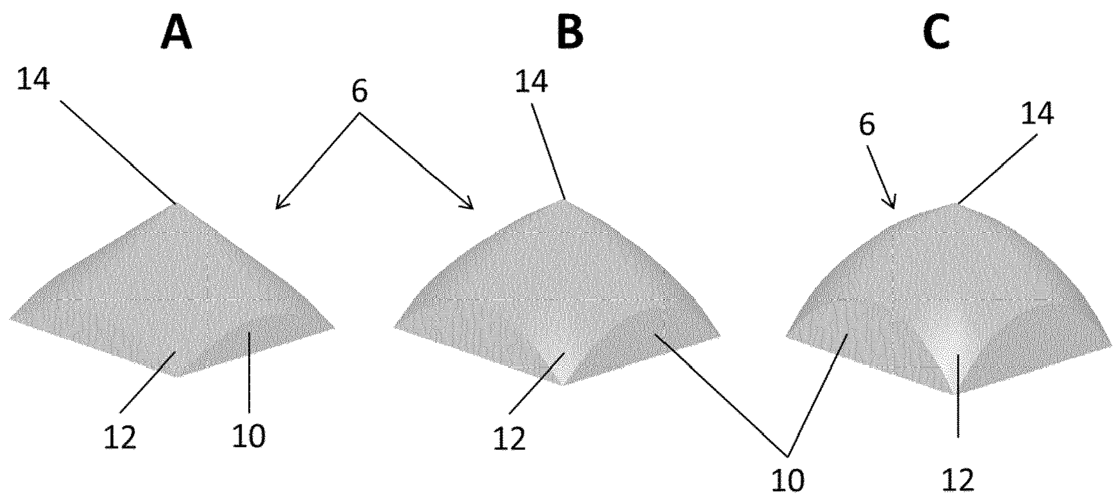

Fig. 5a

## Blendungsbewertung nach UGR

| | | | | | | | | | | | |
|---|---|---|---|---|---|---|---|---|---|---|---|
| ρ Decke | | 70 | 70 | 50 | 50 | 30 | 70 | 70 | 50 | 50 | 30 |
| ρ Wände | | 50 | 30 | 50 | 30 | 30 | 50 | 30 | 50 | 30 | 30 |
| ρ Boden | | 20 | 20 | 20 | 20 | 20 | 20 | 20 | 20 | 20 | 20 |
| Raumgröße X | Y | Blickrichtung quer Zur Lampenachse | | | | | Blickrichtung längs Zur Lampenachse | | | | |
| 2H | 2H | 12.3 | 13.3 | 12.6 | 13.5 | 13.7 | 12.3 | 13.3 | 12.6 | 13.5 | 13.7 |
| | 3H | 12.6 | 13.5 | 12.9 | 13.7 | 14.0 | 12.6 | 13.5 | 12.9 | 13.7 | 14.0 |
| | 4H | 12.8 | 13.6 | 13.1 | 13.8 | 14.1 | 12.8 | 13.6 | 13.1 | 13.8 | 14.1 |
| | 6H | 12.9 | 13.7 | 13.3 | 14.0 | 14.3 | 12.9 | 13.7 | 13.3 | 14.0 | 14.3 |
| | 8H | 13.0 | 13.7 | 13.4 | 14.0 | 14.3 | 13.0 | 13.7 | 13.4 | 14.0 | 14.3 |
| | 12H | 13.1 | 13.8 | 13.4 | 14.1 | 14.4 | 13.1 | 13.8 | 13.4 | 14.1 | 14.4 |
| 4H | 2H | 12.4 | 13.2 | 12.7 | 13.4 | 13.7 | 12.4 | 13.2 | 12.7 | 13.4 | 13.7 |
| | 3H | 12.8 | 13.5 | 13.2 | 13.8 | 14.1 | 12.8 | 13.5 | 13.2 | 13.8 | 14.1 |
| | 4H | 13.1 | 13.7 | 13.5 | 14.0 | 14.4 | 13.1 | 13.7 | 13.5 | 14.0 | 14.4 |
| | 6H | 13.4 | 13.9 | 13.8 | 14.3 | 14.6 | 13.4 | 13.9 | 13.8 | 14.3 | 14.6 |
| | 8H | 13.5 | 14.0 | 13.9 | 14.4 | 14.8 | 13.5 | 14.0 | 13.9 | 14.4 | 14.8 |
| | 12H | 13.6 | 14.0 | 14.1 | 14.4 | 14.9 | 13.6 | 14.0 | 14.1 | 14.4 | 14.9 |
| 8H | 4H | 13.2 | 13.6 | 13.6 | 14.0 | 14.4 | 13.2 | 13.6 | 13.6 | 14.0 | 14.4 |
| | 6H | 13.6 | 14.0 | 14.0 | 14.4 | 14.8 | 13.6 | 14.0 | 14.0 | 14.4 | 14.8 |
| | 8H | 13.8 | 14.1 | 14.3 | 14.5 | 15.0 | 13.8 | 14.1 | 14.3 | 14.5 | 15.0 |
| | 12H | 14.0 | 14.2 | 14.5 | 14.7 | 15.2 | 14.0 | 14.2 | 14.5 | 14.7 | 15.2 |
| 12H | 4H | 13.2 | 13.6 | 13.6 | 14.0 | 14.4 | 13.2 | 13.6 | 13.6 | 14.0 | 14.4 |
| | 6H | 13.6 | 13.9 | 14.1 | 14.4 | 14.8 | 13.6 | 13.9 | 14.1 | 14.4 | 14.8 |
| | 8H | 13.8 | 14.1 | 14.3 | 14.6 | 15.1 | 13.8 | 14.1 | 14.3 | 14.6 | 15.1 |

| Variation der Beobachterposition für Leuchtenabstände S | | |
|---|---|---|
| S = 1.0H | +1.1 / -1.3 | +1.1 / -1.3 |
| S = 1.5H | +2.1 / -1.9 | +2.1 / -1.9 |
| S = 2.0H | +3.5 / -2.4 | +3.5 / -2.4 |
| Standardtabelle | BK02 | BK02 |
| Korrektursummand | -5.5 | -5.5 |

Korrigierte Blenindizes bezogen auf 4000lm Gesamtlichtstrom

Fig. 5b

## Blendungsbewertung nach UGR

| | | | | | | | | | | | |
|---|---|---|---|---|---|---|---|---|---|---|---|
| ρ Decke | | 70 | 70 | 50 | 50 | 30 | 70 | 70 | 50 | 50 | 30 |
| ρ Wände | | 50 | 30 | 50 | 30 | 30 | 50 | 30 | 50 | 30 | 30 |
| ρ Boden | | 20 | 20 | 20 | 20 | 20 | 20 | 20 | 20 | 20 | 20 |
| Raumgröße X | Y | Blickrichtung quer Zur Lampenachse | | | | | Blickrichtung längs Zur Lampenachse | | | | |
| 2H | 2H | 12.2 | 13.2 | 12.5 | 13.4 | 13.6 | 12.2 | 13.2 | 12.5 | 13.4 | 13.6 |
| | 3H | 12.6 | 13.5 | 12.9 | 13.7 | 14.0 | 12.6 | 13.5 | 12.9 | 13.7 | 14.0 |
| | 4H | 12.9 | 13.7 | 13.2 | 13.9 | 14.2 | 12.9 | 13.7 | 13.2 | 13.9 | 14.2 |
| | 6H | 13.0 | 13.8 | 13.4 | 14.1 | 14.4 | 13.0 | 13.8 | 13.4 | 14.1 | 14.4 |
| | 8H | 13.1 | 13.8 | 13.4 | 14.1 | 14.4 | 13.1 | 13.8 | 13.4 | 14.1 | 14.4 |
| | 12H | 13.1 | 13.8 | 13.5 | 14.1 | 14.5 | 13.1 | 13.8 | 13.5 | 14.1 | 14.5 |
| 4H | 2H | 12.3 | 13.1 | 12.6 | 13.4 | 13.7 | 12.3 | 13.1 | 12.6 | 13.4 | 13.7 |
| | 3H | 12.9 | 13.6 | 13.3 | 13.9 | 14.3 | 12.9 | 13.6 | 13.3 | 13.9 | 14.3 |
| | 4H | 13.3 | 13.9 | 13.7 | 14.2 | 14.6 | 13.3 | 13.9 | 13.7 | 14.2 | 14.6 |
| | 6H | 13.6 | 14.1 | 14.0 | 14.4 | 14.8 | 13.6 | 14.1 | 14.0 | 14.4 | 14.8 |
| | 8H | 13.7 | 14.1 | 14.1 | 14.5 | 14.9 | 13.7 | 14.1 | 14.1 | 14.5 | 14.9 |
| | 12H | 13.8 | 14.2 | 14.2 | 14.6 | 15.0 | 13.8 | 14.2 | 14.2 | 14.6 | 15.0 |
| 8H | 4H | 13.4 | 13.8 | 13.8 | 14.2 | 14.6 | 13.4 | 13.8 | 13.8 | 14.2 | 14.6 |
| | 6H | 13.8 | 14.1 | 14.2 | 14.6 | 15.0 | 13.8 | 14.1 | 14.2 | 14.6 | 15.0 |
| | 8H | 14.0 | 14.3 | 14.4 | 14.7 | 15.2 | 14.0 | 14.3 | 14.4 | 14.7 | 15.2 |
| | 12H | 14.1 | 14.4 | 14.6 | 14.9 | 15.4 | 14.1 | 14.4 | 14.6 | 14.9 | 15.4 |
| 12H | 4H | 13.4 | 13.8 | 13.8 | 14.2 | 14.6 | 13.4 | 13.8 | 13.8 | 14.2 | 14.6 |
| | 6H | 13.8 | 14.1 | 14.3 | 14.6 | 15.0 | 13.8 | 14.1 | 14.3 | 14.6 | 15.0 |
| | 8H | 14.0 | 14.3 | 14.5 | 14.8 | 15.2 | 14.0 | 14.3 | 14.5 | 14.8 | 15.2 |
| Variation der Beobachterposition für Leuchtenabstände S | | | | | | | | | | | |
| S = 1.0H | | +0.9 / -1.0 | | | | | +0.9 / -1.0 | | | | |
| S = 1.5H | | +1.9 / -1.7 | | | | | +1.9 / -1.7 | | | | |
| S = 2.0H | | +3.3 / -2.2 | | | | | +3.3 / -2.2 | | | | |
| Standardtabelle | | BK03 | | | | | BK03 | | | | |
| Korrektursummand | | -5.0 | | | | | -5.0 | | | | |
| Korrigierte Blenindizes bezogen auf 4000lm Gesamtlichtstrom | | | | | | | | | | | |

Fig. 5c

## Blendungsbewertung nach UGR

| | | | | | | | | | | | |
|---|---|---|---|---|---|---|---|---|---|---|---|
| ρ Decke | | 70 | 70 | 50 | 50 | 30 | 70 | 70 | 50 | 50 | 30 |
| ρ Wände | | 50 | 30 | 50 | 30 | 30 | 50 | 30 | 50 | 30 | 30 |
| ρ Boden | | 20 | 20 | 20 | 20 | 20 | 20 | 20 | 20 | 20 | 20 |
| Raumgröße X | Y | Blickrichtung quer Zur Lampenachse | | | | | Blickrichtung längs Zur Lampenachse | | | | |
| 2H | 2H | 12.4 | 13.4 | 12.7 | 13.6 | 13.8 | 12.4 | 13.4 | 12.7 | 13.6 | 13.8 |
| | 3H | 12.9 | 13.7 | 13.2 | 14.0 | 14.2 | 12.9 | 13.7 | 13.2 | 14.0 | 14.2 |
| | 4H | 13.1 | 13.9 | 13.4 | 14.2 | 14.4 | 13.1 | 13.9 | 13.4 | 14.2 | 14.4 |
| | 6H | 13.3 | 14.1 | 13.6 | 14.3 | 14.6 | 13.3 | 14.1 | 13.6 | 14.3 | 14.6 |
| | 8H | 13.4 | 14.1 | 13.7 | 14.4 | 14.7 | 13.4 | 14.1 | 13.7 | 14.4 | 14.7 |
| | 12H | 13.4 | 14.1 | 13.8 | 14.4 | 14.8 | 13.4 | 14.1 | 13.8 | 14.4 | 14.8 |
| 4H | 2H | 12.6 | 13.4 | 12.9 | 13.7 | 13.9 | 12.6 | 13.4 | 12.9 | 13.7 | 13.9 |
| | 3H | 13.2 | 13.9 | 13.5 | 14.2 | 14.5 | 13.2 | 13.9 | 13.5 | 14.2 | 14.5 |
| | 4H | 13.5 | 14.1 | 13.9 | 14.5 | 14.8 | 13.5 | 14.1 | 13.9 | 14.5 | 14.8 |
| | 6H | 13.8 | 14.4 | 14.3 | 14.7 | 15.1 | 13.8 | 14.4 | 14.3 | 14.7 | 15.1 |
| | 8H | 14.0 | 14.5 | 14.4 | 14.9 | 15.3 | 14.0 | 14.5 | 14.4 | 14.9 | 15.3 |
| | 12H | 14.1 | 14.5 | 14.5 | 14.9 | 15.3 | 14.1 | 14.5 | 14.5 | 14.9 | 15.3 |
| 8H | 4H | 13.6 | 14.1 | 14.0 | 14.5 | 14.9 | 13.6 | 14.1 | 14.0 | 14.5 | 14.9 |
| | 6H | 14.1 | 14.5 | 14.5 | 14.9 | 15.3 | 14.1 | 14.5 | 14.5 | 14.9 | 15.3 |
| | 8H | 14.3 | 14.6 | 14.8 | 15.1 | 15.5 | 14.3 | 14.6 | 14.8 | 15.1 | 15.5 |
| | 12H | 14.5 | 14.7 | 14.9 | 15.2 | 15.7 | 14.5 | 14.7 | 14.9 | 15.2 | 15.7 |
| 12H | 4H | 13.6 | 14.1 | 14.1 | 14.5 | 14.9 | 13.6 | 14.1 | 14.1 | 14.5 | 14.9 |
| | 6H | 14.1 | 14.4 | 14.6 | 14.9 | 15.4 | 14.1 | 14.4 | 14.6 | 14.9 | 15.4 |
| | 8H | 14.4 | 14.6 | 14.8 | 15.1 | 15.6 | 14.4 | 14.6 | 14.8 | 15.1 | 15.6 |
| Variation der Beobachterposition für Leuchtenabstände S | | | | | | | | | | | |
| S = 1.0H | | +0.7 / -0.9 | | | | | +0.7 / -0.9 | | | | |
| S = 1.5H | | +1.6 / -1.5 | | | | | +1.6 / -1.5 | | | | |
| S = 2.0H | | +2.8 / -2.1 | | | | | +2.8 / -2.1 | | | | |
| Standardtabelle | | BK03 | | | | | BK03 | | | | |
| Korrektursummand | | -4.8 | | | | | -4.8 | | | | |
| Korrigierte Blenindizes bezogen auf 4000lm Gesamtlichtstrom | | | | | | | | | | | |

Fig. 6

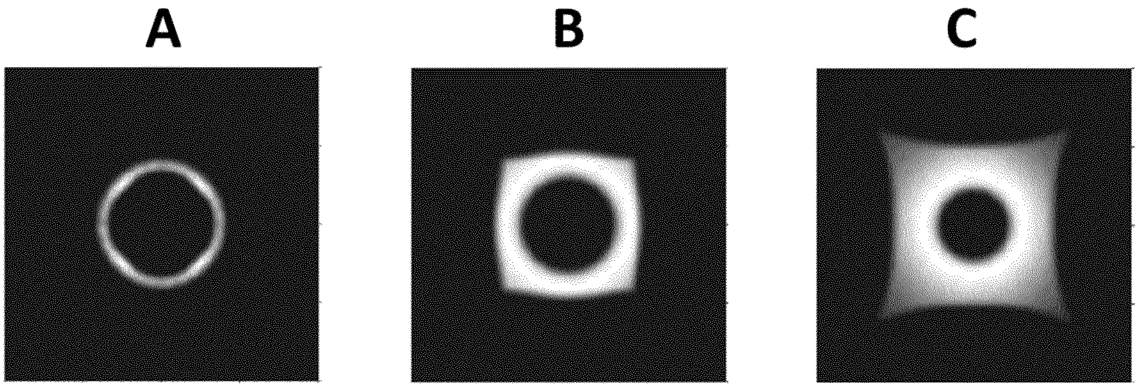

Europäisches Patentamt
European Patent Office
Office européen des brevets

# EUROPÄISCHER RECHERCHENBERICHT

Nummer der Anmeldung
EP 18 17 0481

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2013/277664 A1 (ETORI HIDEKI [JP]) 24. Oktober 2013 (2013-10-24) * Absätze [0008], [0017], [0035] - [0039], [0046] - [0048], [0066] - [0077], [0099], [0110]; Abbildungen 1,2a,3a,4,5,9,11a * ----- | 1-15 | INV. F21V3/04 F21V5/00 ADD. F21V5/02 |
| A | US 2014/071662 A1 (D ANTONIO PETER [US]) 13. März 2014 (2014-03-13) * das ganze Dokument * ----- | 1-15 | |
| | | | RECHERCHIERTE SACHGEBIETE (IPC) |
| | | | F21V G02B |

Der vorliegende Recherchenbericht wurde für alle Patentansprüche erstellt

| Recherchenort | Abschlußdatum der Recherche | Prüfer |
|---|---|---|
| Den Haag | 22. November 2018 | Menn, Patrick |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

4

## ANHANG ZUM EUROPÄISCHEN RECHERCHENBERICHT ÜBER DIE EUROPÄISCHE PATENTANMELDUNG NR.

EP 18 17 0481

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-11-2018

| Im Recherchenbericht angeführtes Patentdokument | Datum der Veröffentlichung | Mitglied(er) der Patentfamilie | Datum der Veröffentlichung |
|---|---|---|---|
| US 2013277664 A1 | 24-10-2013 | CN 103270810 A | 28-08-2013 |
| | | EP 2658344 A1 | 30-10-2013 |
| | | JP 5955777 B2 | 20-07-2016 |
| | | JP WO2012086651 A1 | 22-05-2014 |
| | | KR 20130132908 A | 05-12-2013 |
| | | TW 201238386 A | 16-09-2012 |
| | | US 2013277664 A1 | 24-10-2013 |
| | | WO 2012086651 A1 | 28-06-2012 |
| US 2014071662 A1 | 13-03-2014 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2999835 A
- US 3148172 A
- US 2991273 A
- US 3271367 A
- US 4982014 A
- US 2999846 A
- DE 1570703 A
- DE 2063050 A
- DE 2036052 A
- DE 2211956 A
- DE 3832396 A
- FR 1561518 A1
- WO 2015052106 A2
- WO 2004063249 A1
- WO 200105866 A1
- US 5340905 A
- US 5097002 A
- US 5717057A A
- EP 0839623 A
- WO 9615102 A
- EP 0500496 A


### In der Beschreibung aufgeführte Nicht-Patentliteratur


- Chemistry and Physics of Polycarbonates. **H. SCHNELL.** Monographie. Interscience Publishers, 1964, 28 ff
- **D.G. LEGRAND ; J.T. BENDLER.** Handbook of Polycarbonate Science and Technology. Marcel Dekker, 2000, 72 ff
- **HANS ZWEIFEL.** Plastics Additives Handbook. Hanser Verlag, 2000